# EUROPÄISCHE PATENTSCHRIFT

(11) **EP 1 098 744 B1**
(45) Veröffentlichungstag und Bekanntmachung des Hinweises auf die Patenterteilung: **12.06.2002**
(21) Anmeldenummer: 99947224.4
(22) Anmeldetag: 14.07.1999
(51) Int. Cl.: B29C 33/12, B29C 44/12, B29C 39/12, B29C 70/84

(54) **VERFAHREN ZUR HERSTELLUNG EINES GEPOLSTERTEN GEGENSTANDES**
METHOD FOR PRODUCING A PADDED OBJECT
PROCEDE POUR PRODUIRE UN OBJET REMBOURRE

(30) Priorität: 23.07.1998 DE 19833098
(43) Veröffentlichungstag der Anmeldung: 16.05.2001
(73) Patentinhaber: GRAMMER AG, 92224 Amberg (DE)
(72) Erfinder: KRAUSE, Markus, D-92266 Ensdorf (DE); STORCH, Helmut, D-92224 Amberg (DE)
(74) Vertreter: LOUIS, PÖHLAU, LOHRENTZ & SEGETH
(86) Internationale Anmeldenummer: DE9902207
(87) Internationale Veröffentlichungsnummer: WO0005050

(56) Entgegenhaltungen:
- EP-A- 0 210 587
- EP-A- 0 492 129
- EP-A- 0 738 576
- WO-A-91/14566
- US-A- 5 709 828

## Beschreibung

Zur Herstellung gepolsterter Gegenstände sind verschiedene Verfahren bekannt. Beispielsweise wird zur Realisierung eines gepolsterten Gegenstandes in der DE 43 00 375 A1 ein Verfahren beschrieben, bei dem in einem ersten Verfahrensschritt in eine Tiefzieh-Form ein Bezug eng und faltenfrei eingebracht wird. Anschließend wird in einem zweiten Verfahrensschritt der Bezug mit einem Reaktionsgemisch hinterschäumt. Dieses Reaktionsgemisch bildet nach Ablauf der Reaktion einen Polsterkern. In einem dritten Verfahrensschritt kann dann an der vom Bezug abgewandten Rückseite des Polsterkerns ein formstabiler Körper vorgesehen werden. Das kann durch Gießen eines Hartcoating-Materials geschehen. Zur Durchführung dieses Verfahrens kann ein Formwerkzeug mit zwei unterschiedlichen Deckeln zur Anwendung gelangen.

Zur Realisierung eines gepolsterten Gegenstandes ist es auch bekannt, ein Formwerkzeug mit drei verschiedenen Deckeln anzuwenden. Bei diesem Verfahren gemäß der älteren Patentanmeldung 198 10 711 der Anmelderin wird in einem ersten Verfahrensschritt eine Haut gegossen, welche den oben erwähnten Bezug des gepolsterten Gegenstandes ersetzt. Alle diese bekannten Verfahren sind jedoch relativ aufwendig.

Ein weiteres Verfahren zur Herstellung einer Polsterhülle, die ein Kernteil umschließt wird im Dokument EP-A-0 210 587 offenbart.

Der Erfindung liegt die Aufgabe zugrunde, ein Verfahren zur Herstellung eines gepolsterten Gegenstandes zu schaffen, das vergleichsweise einfach realisierbar ist, d.h. mit welchem gepolsterte Gegenstände einfach und preisgünstig herstellbar sind.

Diese Aufgabe wird erfindungsgemäß durch die Merkmale des Anspruchs 1, d.h. dadurch gelöst, daß eine Polsterhülle mit einem einseitig offenen Hohlraum gegossen wird, daß in den Hohlraum der Polsterhülle ein Kernteil eingebracht wird, das an seiner Oberfläche mit Erhebungen ausgebildet ist, wobei die Erhebungen des Kernteils im in die Polsterhülle eingebrachten Zustand an der Innen-Oberfläche des Hohlraums der Polsterhülle anliegen, so daß das Kernteil von der Innen-Oberfläche der Polsterhülle allseitig definiert beabstandet wird, und daß in den durch die Innen-Oberfläche des Hohlraums der Polsterhülle und durch die Oberfläche des Kernteils bestimmten Spaltraum zwischen der Polsterhülle und dem Kernteil ein Coating-Material eingegossen wird, das den Spaltraum ausfüllt und das Kernteil mit der Polsterhülle fest verbindend sich im Spaltraum verfestigt.

Erfindungsgemäß wird die Polsterhülle in einem Formwerkzeug bspw. durch Gießen hergestellt. Das Kernteil wird davon unabhängig, d.h. bspw. in einem eigenen Formwerkzeug hergestellt. Nach dem Einbringen des Kernteils in den Hohlraum der Polsterhülle wird der Spaltraum zwischen dem Kernteil und der Polsterhülle mit dem Coating-Material ausgefüllt. Das geschieht durch Eingießen des Coating-Materials in den Spaltraum zwischen dem Kernteil und der Polsterhülle. Nach dem Verfestigen des Coating-Materials im besagten Spaltraum ergibt sich durch das verfestigte Coating-Material die gewünschte Formstabilität des gepolsterten Gegenstands. Das Kernteil selbst braucht also nicht besonders formstabil zu sein.

Die Polsterhülle wird zweckmäßigerweise aus einem Reaktionsschaum-Material gegossen. Bevorzugt ist es, die Polsterhülle aus einem Polyurethan(PU)-Integralschaum-Material zu gießen. Die Verwendung eines PU-Integralschaum-Materials ergibt den Vorteil, daß die Polsterhülle eine abriebfeste Außenhaut aufweist. Das ist bei diversen Anwendungen des erfindungsgemäß hergestellten gepolsterten Gegenstandes, wie bspw. bei Armlehnen, Sitz- und Rückenlehnenpolstern, Kopfstützen oder anderen Formteilen von Fahrzeugen oder dergl. vorteilhaft.

Die Polsterhülle kann bspw. auch aus einem Weichschaum-Material gegossen werden.

Das Kernteil kann aus jedem beliebigen Material wie bspw. Holz, Metall, Kunststoff, Kunststoff-Recyclat usw. bestehen, zweckmäßig ist es, das Kernteil aus einem Reaktionsschaum-Material zu gießen. Bevorzugt ist es, das Kernteil aus einem PU-Material zu gießen. Das ist unter dem Gesichtspunkt der Sortenreinheit des erfindungsgemäß hergestellten gepolsterten Gegenstandes und somit unter Recycling-Gesichtspunkten zweckmäßig. Bei dem PU-Material kann es sich bspw. um ein PU-Coating-Material handeln. Hierbei kann es sich um ein Weichcoating-Material oder vorzugsweise um ein Hartcoating-Material handeln.

Um die Verbindung zwischen dem Kernteil und der Polsterhülle mittels des den Spaltraum zwischen der Polsterhülle und dem Kernteil ausfüllenden verfestigten Coating-Materials weiter zu verbessern und gleichzeitig die Formstabilität des gepolsterten Gegenstandes durch das besagte erstarrte Coating-Material zu erhöhen, kann es zweckmäßig sein, wenn das Kernteil mit Durchgangskanälen ausgebildet wird. Diese Durchgangskanäle können sich in Längs- und Querrichtung bzw. in beliebigen Richtungen des Kernteils erstrecken. Auf diese Weise ist ein gepolsterter Gegenstand mit einem Kastenkorpus aus dem verfestigten Coating-Material des Spaltraumes zwischen der Polsterhülle und dem Kernteil realisierbar, wobei der relativ dünnwandige und somit leichtgewichtige Kastenkorpus entsprechend den zuletzt erwähnten Durchgangskanälen mit Versteifungsrippen gestaltet sein kann. Diese leichtgewichtige und dennoch formstabile Ausbildung ist ein weiterer Vorteil des erfindungsgemäß hergestellten Gegenstands.

Bevorzugt ist es, in den Spaltraum zwischen der Polsterhülle und dem Kernteil ein Hartcoating-Material einzugießen. Bei diesem Hartcoating-Material handelt es sich vorzugsweise um ein PU-Hartcoating-Material, so daß insgesamt ein sortenreiner gepolsteter Gegenstand einfach und preisgünstig realisierbar ist. Das erfindungsgemäße Verfahren ist problemlos teilautomatisierbar, wenn es für relativ kleine Stückzahlen zur Anwendung gelangt. Bei größeren Stückzahlen ist das erfindungsgemäße Verfahren selbstverständlich auch vollautomatisch durchführbar. Ein weiterer Vorteil des erfindungsgemäßen Verfahrens besteht darin, daß sowohl die Polsterhülle als auch das Kernteil den jeweiligen Anforderungen entsprechend in einfacher Weise frei gestaltbar sind, was bedeutet, daß auch der Spaltraum zwischen der Polsterhülle und dem Kernteil entsprechend frei gestalt- und dimensionierbar ist, um die jeweils gewünschte hohe mechanische Festigkeit des fertigen gepolsterten Gegenstandes zu gewährleisten.

Weitere Einzelheiten, Merkmale und Vorteile ergeben sich aus der nachfolgenden Beschreibung von in der Zeichnung schematisch dargestellten Verfahrensschritten zur Durchführung des erfindungsgemäßen Verfahrens zur Herstellung eines gepolsterten Gegenstandes, bei dem es sich bspw. um eine Fahrzeug-Armlehne handelt, wobei es sich selbstverständlich versteht, daß das erfindungsgemäße Verfahren nicht auf die Realisierung einer solchen Fahrzeug-Armlehne beschränkt ist. Es zeigen:
- Figur 1: in einer Schnitt-Darstellung einen ersten Arbeitsschritt des Verfahrens zur Herstellung eines gepolsterten Gegenstandes,
- Figur 2: in einer Schnittdarstellung einen nachfolgenden zweiten Arbeitsschritt des erfindungsgemäßen Verfahrens,
- Figur 3: einen nachfolgenden dritten Arbeitsschritt des Verfahrens zur Herstellung eines gepolsterten Gegenstandes und
- Figur 4: in einer den Figuren 1 bis 3 ähnlichen Schnittdarstellung einen nachfolgenden vierten Arbeitsschritt des Verfahrens zur Herstellung eines gepolsterten Gegenstandes.

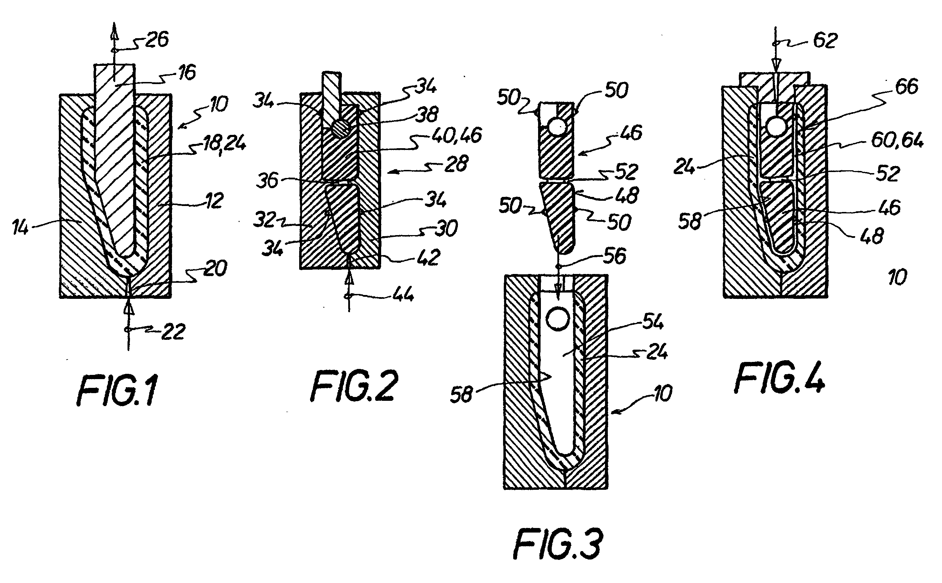

Figur 1 zeigt geschnitten ein Formwerkzeug 10, das zwei Formteile 12 und 14 und ein Zentralteil 16 aufweist. Im zusammengebauten Zustand wird durch die beiden Formteile 12 und 14 und das Zentralteil 16 ein Formhohlraum 18 für eine Polsterhülle festgelegt. Der Formhohlraum 18 ist mit der Außenseite des Formwerkzeuges 10 durch einen Gießkanal 20 strömungstechnisch verbunden. Im zusammengebauten Zustand des Formwerkzeuges 10 wird durch den Gießkanal 20 in den Formhohlraum 18 ein Reaktionsschaum-Material eingebracht, das vorzugsweise von einem PU-Integralschaum-Material gebildet ist. Das ist in Figur 1 durch den Pfeil 22 angedeutet. Das PU-Integralschaum-Material wird in den Formhohlraum 18 derartig eingegossen, daß es den besagten Formhohlraum 18 vollständig ausfüllt. Nach Ablauf der Reaktion des PU-Integralschaum-Materiales ergibt sich eine dem Formhohlraum 18 entsprechende Polsterhülle 24.

Nach der Ausbildung der Polsterhülle 24 wird das Zentralteil 16 aus dem Formwerkzeug 10 entfernt. Das ist in Figur 1 durch den Pfeil 26 angedeutet. Die Polsterhülle 24 verbleibt im geschlossenen Formwerkzeug 10 zwischen den Formteilen 12 und 14.

Figur 2 zeigt in einer Schnitt-Darstellung ein Formwerkzeug 28 für ein Kernteil. Das Formwerkzeug 28 weist zwei Formteile 30 und 32 auf. Die beiden Formteile 30 und 32 sind mit Vertiefungen 34 und mit Querstegen 36 ausgebildet. Durch die beiden Formteile 30 und 32 des Formwerkzeuges 28 erstreckt sich bei dem dargestellten Ausführungsbeispiel eine Lagerachse 38 quer hindurch.

Im geschlossenen Zustand des Formwerkzeuges 28 wird durch seine Formteile 30 und 32 ein Formhohlraum 40 festgelegt, der mittels eines Gießkanales 42 mit dem Äußeren des Formwerkzeuges 28 verbunden ist. Durch diesen Gießkanal 42 wird in den Formhohlraum 40 ein Reaktionsschaum-Material eingegossen, bei dem es sich zweckmäßigerweise um ein PU-Material handelt. Dieses Einbringen des PU-Materials in den Formhohlraum 40 ist in Figur 2 durch den Pfeil 44 verdeutlicht. Das in den Formhohlraum eingegossene PU-Material füllt den Formhohlraum 40 im Formwerkzeug 28 vollständig aus, so daß sich ein dem Formhohlraum 40 konturmäßig entsprechendes Kernteil 46 ergibt. Dieses Kernteil 46 ist auch in Figur 3 verdeutlicht. Aus Figur 3 ist ersichtlich, daß das Kernteil 46 eine Außen-Oberfläche 48 aufweist, von welcher den Vertiefungen 34 in den Formteilen 30 und 32 des Formwerkzeuges 28 entsprechende Erhebungen 50 wegstehen. Außerdem weist das Kernteil 46 den Querstegen 36 des Formwerkzeuges 20 entsprechende Durchgangskanäle 52 auf, wobei die Figur 3 ein Kernteil 46 mit einem solchen Durchgangskanal 52 verdeutlicht.

Nach der Entnahme des Kernteiles 46 aus dem Formwerkzeug 28, das zu diesem Zwecke geöffnet wird, wird das Kernteil 46 in den dem Zentralteil 16 des Formwerkzeuges für die Polsterhülle 24 entsprechenden Hohlraum 54 der im Formwerkzeug 10 verbleibenden Polsterhülle 54 angeordnet, was in Figur 3 durch den Pfeil 56 verdeutlicht ist. Dabei wird das Kernteil 46 mittels der von ihm wegstehenden Erhebungen 50 von der Innen-Oberfläche 58 der Polsterhülle 24 (siehe Figur 3) allseitig definiert beabstandet. In den durch die Innen-Oberfläche 58 des Hohlraumes 54 der Polsterhülle 24 und durch die Oberfläche 48 des Kernteiles 46 bestimmten Spaltraum 60 zwischen der Polsterhülle 24 und dem Kernteil 46 wird dann ein Coating-Material eingegossen, was in Figur 4 durch den Pfeil 62 angedeutet ist. Dieses Coating-Material, bei dem es sich vorzugsweise um ein PU-Hartcoating-Material handelt, füllt den besagten Spaltraum 60 drucklos vollständig aus und erstarrt im Spaltraum 60. Auf diese Weise ergibt sich ein formstabiler, dünnwandiger Kastenkörper 64, welcher die Formstabilität des fertigen gepolsterten Gegenstandes 66 bestimmt. Das Kernteil 46 bildet also bei dem erfindungsgemäßen Verfahren nur ein Formteil zur Realisierung des Kastenkörpers 64. Die Polstereigenschaften des Gegenstandes 66 werden durch die Polsterhülle 24 bestimmt.

Das PU-Hartcoating-Material füllt sowohl den Spaltraum 60 zwischen dem Kernteil 46 und der Polsterhülle 24 als auch den wenigstens einen Durchgangskanal 52 vollständig aus, der sich durch das Kernteil 46 hindurch erstreckt. Das den Durchgangskanal 52 ausfüllende PU-Hartcoating-Material bildet dann eine Quer- bzw. Versteifungsrippe des Kastenkörpers 64. Hierdurch wird also nicht nur die mechanische Festigkeit und Formstabilität des fertigen gepolsterten Gegenstandes 66 wesentlich verbessert, sondern auch die mechanische Verbindung zwischen dem Kernteil 46, der Polsterhülle 24 und dem Kastenkörper 64.

## Patentansprüche

1. Verfahren zur Herstellung eines gepolsterten Gegenstandes, wobei
eine Polsterhülle (24) mit einem einseitig offenen Hohlraum (54) gegossen wird, in den Hohlraum (54) der Polsterhülle (24) ein Kernteil (46) eingebracht wird, das an seiner Oberfläche (48) mit Erhebungen (50) ausgebildet ist, wobei die Erhebungen (50) des Kernteils (46) an der Innen-Oberfläche (58) des Hohlraums (54) der Polsterhülle (24) anliegen, so daß das Kernteil (46) von der Innen-Oberfläche (58) der Polsterhülle (24) allseitig definiert beabstandet wird, und in den durch die Innen-Oberfläche (58) des Hohlraumes (54) der Polsterhülle (24) und durch die Oberfläche (48) des Kernteils (46) bestimmten Spaltraum (60) zwischen der Polsterhülle (24) und dem Kernteil (46) ein Coating-Material eingegossen wird, das den Spaltraum (60) ausfüllt und das Kernteil (46) mit der Polsterhülle (24) fest verbindend im Spaltraum (60) verfestigt wird.

2. Verfahren nach Anspruch 1,
**dadurch gekennzeichnet,**
**daß** die Polsterhülle (24) aus einem Reaktionsschaum-Material gegossen wird.

3. Verfahren nach Anspruch 2,
**dadurch gekennzeichnet,**
**daß** die Polsterhülle (24) aus einem PU-Integralschaum-Material gegossen wird.

4. Verfahren nach Anspruch 1,
**dadurch gekennzeichnet,**
**daß** das Kernteil (46) aus einem Reaktionsschaum-Material gegossen wird.

5. Verfahren nach Anspruch 4,
**dadurch gekennzeichnet,**
**daß** das Kernteil (46) aus einem PU-Material gegossen wird.

6. Verfahren nach einem der Ansprüche 1 bis 5,
**dadurch gekennzeichnet,**
**daß** das Kernteil (46) mit Durchgangskanälen (52) ausgebildet wird.

7. Verfahren nach Anspruch 1,
**dadurch gekennzeichnet,**
**daß** in den Spaltraum (60) zwischen der Polsterhülle (24) und dem Kernteil (46) ein Hart-Coating-Material eingegossen wird.

8. Verfahren nach Anspruch 7,
**dadurch gekennzeichnet,**
**daß** in den Spaltraum (60) zwischen der Polsterhülle (24) und dem Kernteil (46) ein PU-Hartcoating-Material eingegossen wird.

## Claims

1. Method for producing a padded object, in which a padding surround (24) is cast with a cavity (54) which is open on one side, a core part (46), which is formed with elevations (50) on its surface (48), is introduced into the cavity (54) of the padding surround (24), with the elevations (50) of the core part (46) bearing against the inner surface (58) of the cavity (54) of the padding surround (24), so that the core part (46) is kept at a defined distance from the inner surface (58) of the padding surround (24) on all sides, and a coating material is poured into the gap (60) between the padding surround (24) and the core part (46), determined by the inner surface (58) of the cavity (54) of the padding surround (24) and by the surface (48) of the core part (46), fills the gap (60) and is made to set in the gap (60) in such a way that it securely bonds the core part (46) to the padding surround (24).

2. Method according to Claim 1, **characterized in that** the padding surround (24) is cast from a reaction foam material.

3. Method according to Claim 2, **characterized in that** the padding surround (24) is cast from a PU integral foam material.

4. Method according to Claim 1, **characterized in that** the core part (46) is cast from a reaction foam material.

5. Method according to Claim 4, **characterized in that** the core part (46) is cast from a PU material.

6. Method according to one of Claims 1 to 5, **characterized in that** the core part (46) is formed with passages (52).

7. Method according to Claim 1, **characterized in that** a hard coating material is poured into the gap (60) between the padding surround (24) and the core part (46).

8. Method according to Claim 7, **characterized in that** a PU hard coating material is poured into the gap (60) between the padding surround (24) and the core part (46).

## Revendications

1. Procédé pour la fabrication d'objets rembourrés dans lequel une gaine rembourrée (24) présentant un espâce creux ouvert sur un côté (54) est coulé dans un moule, dans l'espace creux (54) de là gaine rembourrée (24) est introduit un élément formant noyau (46), lequel présente sur sa surface (48) une portion en relief (50), la portion en relief (50) du noyau (46) reposant sur la surface interne (58) de l'espace creux (54) de la gaine rembourrée (24), de manière telle que le noyau (46) est maintenu sur tous ses côtés à une certaine distance de la surface interne (58) de la gaine rembourrée (24) et, dans les espaces en forme de fentes définis entre la surface interne (58) de l'espace creux (54), la gaine rembourrée (24) et la surface (48) du noyau (46), une matière de revêtement est coulée entre la gaine rembourrée (24) et le noyau (46), matière qui remplit l'espace en forme de fente (60) et qui solidifie le noyau (46) avec la gaine rembourrée (24) en les réunissant solidement.

2. Procédé selon la revendication 1, **caractérisé en ce que** la gaine rembourrée (24) est coulée en une matière formant une mousse par réaction.

3. Procédé selon la revendication 2, **caractérisé en ce que** la gaine rembourrée (24) est coulée en une matière formant une mousse intégrale du type PU (polyuréthane).

4. Procédé selon la revendication 1, **caractérisé en ce que** le noyau (46) est coulé en une matière formant une mousse par réaction.

5. Procédé selon la revendication 4, **caractérisé en ce que** le noyau (46) est coulé en une matière du type PU.

6. Procédé selôn l'une des revendications 1 à 5, **caractérisé en ce que** le noyau (46) est réalisé avec des canaux de traversée (52).

7. Procédé selon la revendication 1, **caractérisé en ce que**, dans l'espace en forme de fente (60) entre la gaine rembourrée (24) et le noyau (46) est coulée une matière formant un revêtement dur.

8. Procédé selon la revendication 7, **caractérisé en ce que**, dans l'espace en forme de fente (60) entre la gaine rembourrée (24) et le noyau (46) est coulée une matière de revêtement dure du type PU.
